(19) Europäisches Patentamt
European Patent Office
Office européen des brevets

(11) **EP 1 223 764 B1**

(12) **FASCICULE DE BREVET EUROPEEN**

(45) Date de publication et mention
de la délivrance du brevet:
**15.03.2006 Bulletin 2006/11**

(51) Int Cl.:
***H04N 7/30*** *(2006.01)* ***H04N 7/26*** *(2006.01)*

(21) Numéro de dépôt: **01204958.1**

(22) Date de dépôt: **18.12.2001**

(54) **Procédé de traitement de données d'image**

Bilddatenverarbeitungsverfahren

Image data processing method

(84) Etats contractants désignés:
**DE ES FR GB IT**

(30) Priorité: **26.12.2000 FR 0017046**

(43) Date de publication de la demande:
**17.07.2002 Bulletin 2002/29**

(73) Titulaire: **Koninklijke Philips Electronics N.V.
5621 BA Eindhoven (NL)**

(72) Inventeur: **Rouvellou, Laurent
75008 Paris (FR)**

(74) Mandataire: **Chaffraix, Jean
Société Civile SPID,
156, Boulevard Haussmann
75008 Paris (FR)**

(56) Documents cités:
**EP-A- 0 817 497 WO-A-00/42778
US-A- 5 229 864 US-A- 5 422 964**

• **AASE S O ET AL: "SOME FUNDAMENTAL EXPERIMENTS IN SUBBAND CODING OF IMAGES" VISUAL COMMUNICATION AND IMAGE PROCESSING '91: VISUAL COMMUNICATION. BOSTON, NOV. 11 - 13, 1991, PROCEEDINGS OF SPIE, BELLINGHAM, SPIE, US, vol. 2 VOL. 1605, 11 novembre 1991 (1991-11-11), pages 734-744, XP000479280**

## Description

La présente invention concerne un procédé de traitement de données comprises dans une image numérique d'entrée.

Elle trouve son application pour la détection de bruit de contour (en anglais "ringing noise") dans une image numérique précédemment codée puis décodée selon une technique de codage par blocs, la norme MPEG (de l'anglais Moving Picture Experts Group) par exemple, et pour la correction des données comprises dans l'image numérique afin d'atténuer les artefacts visuels causés par la technique de codage par blocs.

Le brevet européen n° 0 817 497 A2 décrit une méthode permettant de réduire les artefacts de blocs et les artefacts dus au bruit de contour d'une image compensée en mouvement. Pour cela, la méthode de filtrage selon l'art antérieur comprend une étape de filtrage gradient permettant de générer une carte de contours binaires en effectuant un seuillage à partir de valeurs de seuil dites locale et globale. Ladite méthode comprend une étape permettant de décider si une zone à l'intérieur de la carte de contours binaires, ladite zone étant déterminée à l'aide d'une fenêtre de filtrage, est une zone homogène ou une zone contenant des contours. La méthode comprend enfin une étape de filtrage qui utilise un premier jeu de coefficients prédéterminés si la zone est homogène, et un second jeu de coefficients prédéterminés si la zone contient des contours, le second jeu de coefficients prédéterminés étant adapté en fonction de la position des contours dans la zone.

Le document WO-A-0042778 décrit (page 25) une méthode de détection de bruit de contour utilisant variance et moyenne de deux blocs de pixels adjacents (3x3). Si les moyennes des blocs sont très similaires et les variances sont très différentes, un bruit de contour est détecté.

La présente invention a pour but de proposer une méthode de traitement de données permettant de détecter les bruits de contour.

En effet, si la méthode de l'art antérieur permet de corriger partiellement les bruits de contour, elle ne divulgue pas une méthode permettant de détecter lesdits bruits. Sans la détection et la localisation de ces bruits de contour, il est difficile d'appliquer une méthode de post-traitement qui soit véritablement efficace.

Afin de pallier ces inconvénients, le procédé de traitement de données selon la présente invention est remarquable en ce qu'il comprend les étapes de :

- calcul d'une valeur d'activité spatiale d'un pixel courant à partir de valeurs dudit pixel courant et de pixels qui lui sont adjacents,
- détermination d'une zone uniforme non-naturelle si la valeur d'activité spatiale de plusieurs pixels consécutifs est inférieure à une première valeur prédéterminée de seuil,
- filtrage gradient de valeurs des pixels destinée à détecter des contours de forte intensité lumineuse à l'intérieur de l'image,
- détermination d'un artefact si la valeur d'activité spatiale d'un pixel courant est supérieure à une seconde valeur prédéterminée de seuil et est concentrée sur ledit pixel, et
- détection d'un artefact dû au bruit de contour si l'artefact issu de l'étape de détermination d'artefact se trouve entre une zone uniforme non-naturelle et un contour de forte intensité lumineuse proches l'un de l'autre.

Avec une telle méthode de traitement de données, un bruit de contour est détecté comme étant un pixel de forte activité spatiale susceptible d'apparaître entre une zone uniforme non-naturelle et un contour de forte intensité lumineuse proches dans l'espace. La méthode de détection des bruits de contour peut alors conduire à une amélioration de leur correction, le filtrage suivant l'étape de détection pouvant être appliqué de manière adaptative.

C'est pourquoi la méthode de traitement de données selon la présente invention est remarquable en ce qu'elle comprend en outre une étape de filtrage des valeurs des pixels compris dans une zone de filtrage se trouvant entre une zone uniforme non-naturelle et un contour de forte intensité lumineuse proches l'un de l'autre où au moins un artefact dû au bruit de contour a été détecté.

Un tel procédé de traitement de données peut ainsi utiliser un premier filtre pour un pixel adjacent à un contour de forte intensité lumineuse, les coefficients dudit premier filtre dépendant de la position du pixel adjacent par rapport au contour de forte intensité lumineuse, et un second filtre pour les autres pixels de la zone de filtrage.

Le couplage de la méthode de traitement d'artefacts dus à des bruits de contour à une méthode de traitement des artefacts de blocs permet de surcroît d'améliorer la qualité de l'image corrigée par rapport à l'image initiale.

C'est ainsi que le procédé de traitement de données selon la présente invention est remarquable en ce qu'il est associé à un procédé de traitement des artefacts de blocs, le second procédé utilisant la même étape de filtrage gradient de valeurs des pixels afin de détecter une zone de contours naturels à l'intérieur de l'image.

L'existence d'une étape commune accroît l'efficacité de la méthode de traitement de données tout en simplifiant la mise en oeuvre de l'association des deux procédés.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 est un diagramme représentant la méthode de traitement de données selon la présente invention,
- la Fig. 2 illustre l'étape de détermination d'artefacts dus au bruit de contour pour une configuration donnée de valeurs de pixels,
- la Fig. 3 est un diagramme représentant l'étape de détection d'artefacts dus au bruit de contour,
- la Fig. 4 illustre les différentes configurations de pixels prises en compte par l'étape de post-traitement selon l'invention,
- les Figs. 5a, b, c et d illustrent l'étape de post-traitement pour différentes configurations de pixels comprenant des zones uniformes non-naturelles et des contours de forte intensité lumineuse, et
- la Fig. 6 est un diagramme représentant la méthode de traitement d'artefacts de blocs selon la présente invention.

La présente invention concerne une méthode de traitement de données comprises dans un signal numérique vidéo d'entrée, ladite méthode étant destinée à améliorer la qualité visuelle dudit signal numérique vidéo lorsque celui a été précédemment codé selon une technique de codage par blocs.

La méthode de traitement de données a été développée plus particulièrement dans le cadre de séquences d'images numériques codées puis décodées selon la norme MPEG. Elle reste néanmoins applicable pour tout autre signal numérique vidéo codé puis décodé selon une technique de codage par blocs telle que H.261 ou H.263 par exemple.

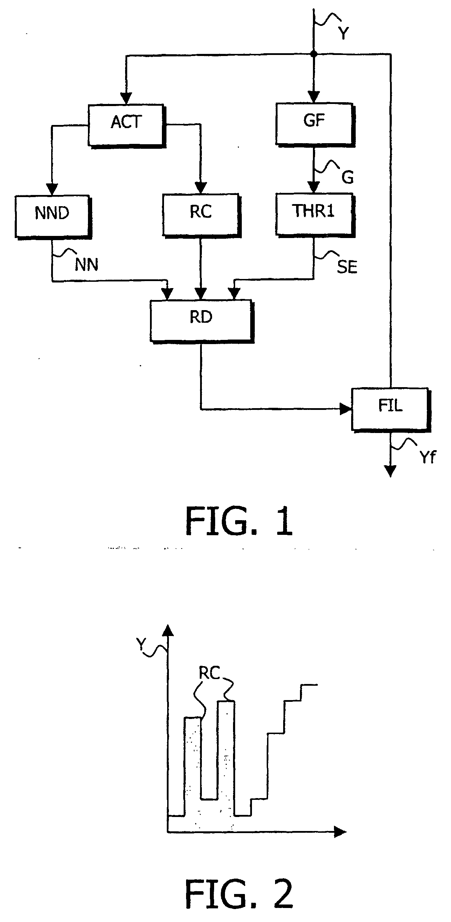

La Fig. 1 représente un diagramme de la méthode de traitement de données selon l'invention. Ladite méthode de traitement de données comprend :

- une étape de calcul (ACT) d'une valeur d'activité spatiale d'un pixel courant à partir de valeurs (Y) dudit pixel courant et de pixels qui lui sont adjacents,
- une étape de détermination (NND) d'une zone uniforme non-naturelle (NN) si la valeur d'activité spatiale de plusieurs pixels consécutifs est inférieure à une première valeur prédéterminée de seuil,
- une étape de filtrage gradient (GF) de valeurs (Y) des pixels permettant de détecter (THR1) des contours de forte intensité lumineuse (SE) à l'intérieur de l'image,
- une étape de détermination (RC) d'un artefact si la valeur d'activité spatiale d'un pixel courant est supérieure à une seconde valeur prédéterminée de seuil et est concentrée sur ledit pixel,
- une étape de détection (RD) d'un artefact dû au bruit de contour si l'artefact issu de l'étape de détermination d'artefact (RC) se trouve entre une zone uniforme non-naturelle (NN) et un contour de forte intensité lumineuse (SE) proches l'un de l'autre,
- une étape de filtrage (FIL) des valeurs (Y) des pixels compris dans une zone de filtrage se trouvant entre une zone uniforme non-naturelle (NN) et un contour de forte intensité lumineuse (SE) proches l'un de l'autre où au moins un artefact dû au bruit de contour a été détecté.

Dans un premier temps, la méthode de traitement de données a pour but de détecter les artefacts dus au bruit de contour. Ces artefacts apparaissent généralement autour des contours fortement contrastés. Les artefacts dus au bruit de contour présentent, selon l'orientation des contours, soit une effet chatoyant (en anglais "shimmering") le long du contour, soit un effet d'échos multiples.

La méthode de détection d'artefacts dus au bruit de contour est basée sur le fait que les blocs qui contiennent des contours de forte intensité lumineuse et sont situés dans une zone de très faible activité spatiale sont susceptibles d'être des artefacts de bruit de contour. C'est pourquoi la méthode de traitement de données comprend tout d'abord une étape de calcul (ACT) d'une valeur d'activité spatiale d'un pixel courant à partir de valeurs (Y) dudit pixel courant et de pixels qui lui sont adjacents. Dans le mode de réalisation préférée, l'activité spatiale $\sigma(i,j)$ d'un pixel courant de position $(i,j)$ est calculée selon les équations (1) à (3) à partir de valeurs (Y) de luminance des pixels :

$$\sigma(i, j) = \sigma_h(i, j) + \sigma_v(i, j) \tag{1}$$

$$\sigma_h(i, j) = abs(Y(i, j) - Y(i, j + 1)) + abs(Y(i, j) - Y(i, j - 1)) \tag{2}$$

$$\sigma_v(i, j) = abs(Y(i, j) - Y(i + 1, j)) + abs(Y(i, j) - Y(i - 1, j)) \tag{3}$$

où abs(x) est la fonction qui donne la valeur absolue de x.

Selon un mode de réalisation plus économique du point de vue de l'implémentation, l'activité spatiale verticale est calculée de la façon suivante :

$$\sigma_v(i, j) = abs(Y(i, j) - Y(i + 1, j)) \qquad (4)$$

Dans ce cas, une seule ligne de l'image est mémorisée. Une autre simplification de la méthode consiste à éliminer les zones très sombres et très brillantes où les valeurs de luminance sont respectivement très faibles et très élevées. En effet, des zones naturelles de très faible activité spatiale apparaissent naturellement dans ces types de configurations.

Il s'agit ensuite de détecter les zones de très faible activité spatiale. Ces zones sont appelées ici zones uniformes non-naturelles. En effet, elles résultent d'un codage puis d'un décodage selon une technique de codage par blocs qui leur confèrent une activité spatiale quasiment nulle, ce qui n'arrive que très rarement pour les images naturelles non-codées. Dans le mode de réalisation préférée, l'étape de détermination (NND) d'une zone uniforme non-naturelle (NN) détecte une telle zone si la valeur d'activité spatiale de 5 pixels consécutifs est inférieure à une première valeur prédéterminée de seuil égal à 3. La détection de zones uniformes non-naturelles peut également s'effectuer sur un plus grand nombre de pixels consécutifs ou encore sur un ensemble de pixels de faible activité spatiale selon une direction verticale. Cependant, les résultats obtenus selon ce mode de réalisation sont suffisamment bons pour ne pas accroître la complexité de la méthode.

L'étape suivante consiste alors à détecter les contours de forte intensité lumineuse (SE). Pour cela, la méthode de détection d'artefacts dus au bruit de contour comprend une étape de filtrage gradient (GF) des valeurs (Y) des pixels contenus dans l'image numérique d'entrée afin de fournir des valeurs filtrées (G). Dans le mode de réalisation préférée, ladite étape de filtrage gradient utilise des filtres de Sobel. De tels filtres ont été choisis car ils assurent une détection de contours à la fois robuste et efficace. Les filtres de Sobel $S_H$ et $S_V$ appliqués respectivement horizontalement et verticalement sont les suivants :

$$S_H = \begin{bmatrix} -1 & -2 & -1 \\ 0 & 0 & 0 \\ 1 & 2 & 1 \end{bmatrix} \qquad S_V = \begin{bmatrix} -1 & 0 & 1 \\ -2 & 0 & 2 \\ -1 & 0 & 1 \end{bmatrix} \qquad (5)$$

Les valeurs de luminance $G_H$ et $G_V$ après filtrage sont alors $G_H = Y.S_H$ et $G_V = Y.S_V$. Ces valeurs filtrées (G) sont ensuite comparées à des valeurs de seuil (THR1). Si elles sont supérieures aux valeurs de seuil, alors un contour de forte intensité lumineuse (SE) est détecté. Dans le mode de réalisation préférée, les valeurs de seuil horizontal $THR1_H$ et vertical $THR1_V$ sont égales à 150 pour des valeurs de luminance variant de 0 à 255.

Il s'ensuit une étape de détermination (RC) d'un artefact. La Fig. 2 illustre l'étape de détermination d'artefacts pour une configuration donnée de valeurs de pixels. Un artefact est déterminé si la valeur d'activité spatiale d'un pixel courant est supérieure à une seconde valeur prédéterminée de seuil et est concentrée sur ledit pixel. Dans le mode de réalisation préférée, un artefact est déterminé si :

$$(\sigma_v(i, j) > 3) \, et \, (\sigma_v(i, j) > 4 \cdot abs(Y(i - 1, j) - Y(i + 1, j)))$$
$$ou \, (\sigma_h(i, j) > 3) \, et \, (\sigma_h(i, j) > 4 \cdot abs(Y(i, j - 1) - Y(i, j + 1))) \qquad (6)$$

La détermination d'artefact n'est pas suffisante car des zones de texture naturelle peuvent parfois être considérées comme des bruits de contour si elles ne sont pas analysées dans un contexte plus large. C'est pourquoi l'artefact est analysé dans une zone où un artefact dû au bruit de contour est susceptible d'apparaître, c'est à dire dans une zone comprise entre un zone uniforme non-naturelle et un contour de forte intensité lumineuse.

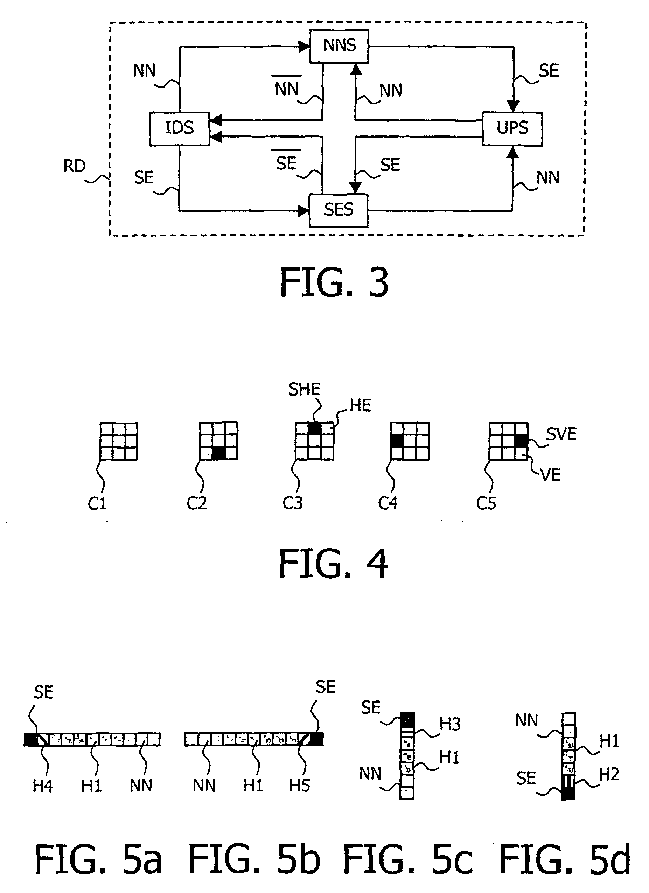

La Fig. 3 illustre l'étape de détection (RD) d'artefacts dus au bruit de contour. Dans un état de repos (IDS), l'étape ne fait rien. Lorsqu'une zone uniforme non-naturelle (NN) est détectée alors que l'étape de détection est à l'état de repos, l'étape de détermination (RD) active l'état de détection de zone uniforme non-naturelle (NNS). Cet état compte les artefacts durant une période de M pixels consécutifs. Au delà de cette période, il retourne $(\overline{NN})$ à l'état de repos (IDS). Lorsqu'un contour de forte intensité lumineuse (SE) est détecté alors que l'étape de détection est à l'état de repos, l'étape de détection active l'état de détection de contour de forte intensité lumineuse (SES). Cet état compte les artefacts durant une période de N pixels consécutifs. Au delà de cette période, il retourne (SE) à l'état de repos (IDS).

Si une zone uniforme non-naturelle (NN) est détectée alors que l'étape de détection est à l'état de détection de contour de forte intensité lumineuse (SES), l'étape de détection active l'état de détection d'artefact dû au bruit de contour (UPS). De même, si un contour de forte intensité lumineuse (SE) est détectée alors que l'étape de détection est à l'état de détection de zone uniforme non-naturelle (NNS), l'étape de détection active également l'état de détection d'artefact dû au bruit de contour (UPS). Cet état compte globalement et localement les artefacts dus au bruit de contour et retourne à l'état de détection de zone uniforme non-naturelle (NNS) lorsqu'une nouvelle zone uniforme non-naturelle (NN) a été déterminée ou à l'état de détection de contour de forte intensité lumineuse (SES) si un contour de forte intensité lumineuse a été détecté.

Ainsi, un artefact dû au bruit de contour est détecté si l'artefact issu de l'étape de détermination d'artefact (RC) se trouve entre une zone uniforme non-naturelle (NN) et un contour de forte intensité lumineuse (SE) proches l'un de l'autre, leur proximité étant définie par les périodes M et N.

La méthode de détection qui vient d'être décrite permet de détecter si un signal vidéo, reçu par un récepteur - décodeur numérique de télévision ou un simple récepteur de télévision, a été codé selon une technique de codage par blocs. Selon le résultat de la méthode de détection, des actions correctrices sont alors décidées. Ces actions sont, par exemple, d'appliquer une méthode de post-traitement en fonction des données fournies par la méthode de détection.

La méthode de post-traitement de données selon l'invention comprend une étape de filtrage qui ne s'applique pas uniquement aux artefacts détectés mais à toutes les pixels compris dans une zone de filtrage se trouvant entre une zone uniforme non-naturelle et un contour de forte intensité lumineuse proches l'un de l'autre où au moins un artefact dû au bruit de contour a été détecté.

Dans un premier mode de réalisation, un filtre linéaire est utilisé, et la fenêtre de filtrage est constituée de 3 x 3 pixels. Ce filtre $H_1$ est le suivant :

$$H_1 = \begin{bmatrix} 1 & 1 & 1 \\ 0 & 0 & 0 \\ 1 & 1 & 1 \end{bmatrix} \qquad\qquad (7)$$

Cependant, comme les bruits de contour apparaissent très près des contours, un tel filtre peut détériorer lesdits contours. C'est pourquoi un second mode de réalisation consiste à tester le voisinage d'un pixel afin d'appliquer le filtre adapté. Une approche générale basée sur ce principe consiste alors à effectuer 8 tests et à utiliser 16 filtres différents. Afin de réduire la complexité d'une telle approche, seules cinq types de configurations de pixels sont prises en compte. Ces configurations sont illustrées à la Fig. 4. La première configuration (C1) correspond au cas où aucun contour de forte intensité lumineuse n'a été détecté. Les deuxième et troisième configurations (C2 et C3) correspondent au cas où un pixel, respectivement en bas et en haut de la fenêtre de filtrage, a été détecté comme un contour horizontal de forte intensité lumineuse (SHE). Dans ce cas, les pixels qui lui sont adjacents à gauche et à droite sont considérés comme étant des contours horizontaux (HE). Les quatrième et cinquième configurations (C4 et C5) correspondent au cas où un pixel, respectivement à gauche et à droite de la fenêtre de filtrage, a été détecté comme un contour vertical de forte intensité lumineuse (SVE). Dans ce cas, les pixels qui lui sont adjacents au dessus et au dessous sont considérés comme étant des contours verticaux (VE).

Dans ces conditions, l'étape de filtrage (FIL) utilise cinq filtres différents ($H_1$ à $H_5$), à savoir un premier filtre ($H_2$ to $H_5$) pour un pixel adjacent à un contour de forte intensité lumineuse (SE), les coefficients dudit premier filtre dépendant de la position du pixel adjacent par rapport au contour de forte intensité lumineuse, et un second filtre ($H_1$) pour les autres pixels de la zone de filtrage.

Les filtres $H_2$ à $H_5$ sont les suivants :

$$H_2 = \begin{bmatrix} 1 & 2 & 1 \\ 1 & 2 & 1 \\ 0 & 0 & 0 \end{bmatrix} \quad H_3 = \begin{bmatrix} 0 & 0 & 0 \\ 1 & 2 & 1 \\ 1 & 2 & 1 \end{bmatrix} \quad H_4 = \begin{bmatrix} 0 & 1 & 1 \\ 0 & 2 & 2 \\ 0 & 1 & 1 \end{bmatrix} \quad H_5 = \begin{bmatrix} 1 & 1 & 0 \\ 2 & 2 & 0 \\ 1 & 1 & 0 \end{bmatrix} \qquad (8)$$

Les Figs. Sa, b, c et d illustrent l'étape de post-traitement pour les 5 configurations de pixels comprenant des zones uniformes non-naturelles (NN) et des contours de forte intensité lumineuse (SVE ou SHE). La Fig. Sa correspond à la configuration C4 pour le pixel situé à droite du contour de forte intensité lumineuse (SE); le filtre $H_4$ est donc appliqué

à ce pixel puis le filtre H1 est appliqué pour les autres pixels situés entre le contour de forte intensité lumineuse et la zone uniforme non-naturelle. La Fig. 5b correspond à la configuration C5 pour le pixel situé à gauche du contour de forte intensité lumineuse (SE); le filtre $H_5$ est donc appliqué à ce pixel et le filtre H1 est appliqué pour les autres pixels situés entre le contour de forte intensité lumineuse et la zone uniforme non-naturelle. La Fig. 5c correspond à la configuration C3 pour le pixel situé au dessous du contour de forte intensité lumineuse (SE); le filtre $H_3$ est donc appliqué à ce pixel puis le filtre H1 est appliqué pour les autres pixels situés entre le contour de forte intensité lumineuse et la zone uniforme non-naturelle. La Fig. 5d correspond à la configuration C2 pour le pixel situé au dessus du contour de forte intensité lumineuse (SE); le filtre $H_2$ est donc appliqué à ce pixel puis le filtre H1 est appliqué pour les autres pixels situés entre le contour de forte intensité lumineuse et la zone uniforme non-naturelle.

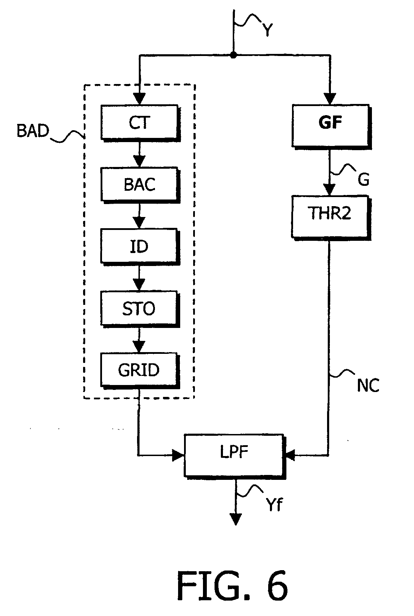

La méthode de traitement de données selon l'invention peut gagner en efficacité si la méthode de post-traitement d'artefacts dus au bruit de contour est appliquée en parallèle avec une méthode de post-traitement d'artefact de blocs. La Fig. 6 représente un diagramme de la méthode de post-traitement d'artefact de blocs selon l'invention. Ladite méthode de traitement de données comprend :

- l'étape de filtrage gradient (GF) de valeurs (Y) des pixels permettant de détecter (THR2) une zone de contours naturels (NC) à l'intérieur de l'image numérique d'entrée, à partir de valeurs de seuil horizontal $THR2_H$ et vertical $THR2_V$ respectivement égales à 35 et 50 pour des valeurs de luminance variant de 0 à 255,
- une étape de détection (BAD) d'artefacts de blocs dus à la technique de codage par blocs, ladite étape de détection comprenant les sous-étapes :

   - de calcul (CT) d'une valeur de discontinuité à partir des valeurs (Y) d'un pixel courant et de pixels adjacents audit pixel courant, donnant les valeurs de discontinuité $c_v$ et $c_h$ à partir des équations suivantes :

$$c_v(i,j) = \begin{cases} 1 & si\ 2 \cdot Y(i,j) = Y(i-1,j) + Y(i+1,j) \\ 0 & sinon \end{cases} \qquad (9)$$

$$c_h(i,j) = \begin{cases} 1 & si\ 2 \cdot Y(i,j) = Y(i,j-1) + Y(i,j+1) \\ 0 & sinon \end{cases} \qquad (10)$$

   - de détermination (BAC) d'une valeur d'artefact A du pixel courant à partir de valeurs de discontinuité du pixel courant et de pixels voisins du pixel courant, l'objectif de cette étape étant de déterminer une discontinuité centrée sur le pixel courant de position (i,j), et une continuité dans son voisinage proche comme, par exemple, avec l'équation (11) :

$$A(i,j) = \overline{c_h(i,j-1)} \cdot \overline{c_h(i,j)} \cdot (c_h(i,j+1) + c_h(i,j+3) + c_h(i,j-4) + c_h(i,j-2)) \qquad (11)$$

où $\overline{c}$ représente la valeur complémentaire de c,

   - d'identification (ID) des artefacts de blocs dus à une technique de codage par blocs à partir des valeurs d'artefact, un artefact de bloc horizontal ou vertical étant identifié respectivement si W artefacts consécutifs selon une direction horizontale ou H artefacts consécutifs selon une direction verticale ont été déterminés, H étant la hauteur d'un bloc et W sa largeur,
   - de stockage (STO) d'une position dans l'image des artefacts de blocs issus de l'étape d'identification (ID) dans des tableaux hTab(i%H) et vTab(j%W), i étant la ligne de l'image où se trouve l'artefact de bloc horizontal, j la colonne de l'image où se trouve l'artefact de bloc vertical et % étant l'opérateur qui a pour résultat le reste de la division de i par H,
   - de calcul (GRID) d'une position d'une grille correspondant aux blocs de la technique de codage par blocs à partir d'une position majoritaire (imax,jmax) des artefacts de blocs dans les tableaux hTab et vTab, et d'une taille de grille à partir d'une plus grande valeur parmi des valeurs de compteurs représentant un nombre d'occurrence d'une distance entre un artefact de bloc vertical courant et un artefact de bloc vertical le précédant immédiatement.

- une étape de filtrage passe bas (LPF) des valeurs (Y) des pixels issus de l'étape de détection d'artefacts de blocs (BAD) à l'exception des pixels contenus dans les zones de contours naturels (NC) déterminées par l'étape de filtrage gradient.

La description ci-dessus en référence aux Figs. 2 à 6 illustre l'invention plus qu'elle ne la limite. Il est évident qu'il existe d'autres alternatives qui rentrent dans la portée des revendications ci-jointes.

Il existe de nombreuses manières pour implémenter les fonctions décrites au moyen de logiciel (en anglais "software"). A cet égard, les Figs. 2 à 6 sont très schématiques, chaque figure représentant un mode de réalisation seulement Donc, bien qu'une figure montre différentes fonctions sous forme de blocs séparés, ceci n'exclut pas qu'un seul logiciel effectue plusieurs fonctions. Ceci n'exclut pas non plus qu'une fonction puisse être effectuée par un ensemble de logiciels.

Il est possible d'implémenter ces fonctions au moyen d'un circuit de récepteur de télévision ou d'un circuit de récepteur - décodeur numérique de télévision (en anglais "set top box"), ledit circuit étant convenablement programmé. Un jeu d'instructions contenu dans une mémoire de programmation peut provoquer le circuit à effectuer différentes opérations décrites précédemment en référence aux Figs. 2 à 6. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou de ces étapes.

## Revendications

1. Procédé de traitement de données d'une image numérique d'entrée constituée de pixels pour la détection d'un artefact du an bruit de contour, edit procédé comprenant les étapes de :

   - calcul (ACT) d'une valeur d'activité spatiale d'un pixel courant à partir de valeurs (Y) dudit pixel courant et de pixels qui lui sont adjacents,
   - détermination (NND) d'une zone uniforme non-naturelle (NN) si la valeur d'activité spatiale de plusieurs pixels consécutifs est inférieure à une première valeur prédéterminée de seuil,
   - filtrage gradient (GF) de valeurs (Y) des pixels, destinée à détecter (THR1) des contours de forte intensité lumineuse (SE) à l'intérieur de l'image,
   - détermination (RC) d'un artefact si la valeur d'activité spatiale d'un pixel courant est supérieure à une seconde valeur prédéterminée de seuil et est concentrée sur ledit pixel, et
   - détection (RD) d'un artefact dû au bruit de contour si l'artefact issu de l'étape de détermination d'artefact (RC) se trouve entre une zone uniforme non-naturelle (NN) et un contour de forte intensité lumineuse (SE) proches l'un de l'autre.

2. Procédé de traitement de données selon la revendication 1, **caractérisé en ce que** l'étape de filtrage gradient (GF) utilise un filtre de Sobel.

3. Procédé de traitement de données selon la revendication 1, **caractérisé en ce qu'**il comprend en outre une étape de filtrage (FIL) des valeurs (Y) des pixels compris dans une zone de filtrage se trouvant entre une zone uniforme non-naturelle (NN) et un contour de forte intensité lumineuse (SE) proches l'un de l'autre et où au moins un artefact dû au bruit de contour a été détecté.

4. Procédé de traitement de données selon la revendication 3, **caractérisé en ce que** l'étape de filtrage (FIL) utilise un premier filtre ($H_2$ to $H_5$) pour un pixel adjacent à un contour de forte intensité lumineuse (SE), les coefficients dudit premier filtre dépendant de la position du pixel adjacent par rapport au contour de forte intensité lumineuse, et un second filtre ($H_1$) pour les autres pixels de la zone de filtrage.

5. Procédé de traitement de données selon la revendication 1, **caractérisé en ce qu'**il est associé à un procédé de traitement des artefacts de blocs, le dernier procédé utilisant l'étape de filtrage gradient (GF) de valeurs (Y) des pixels afin de détecter une zone de contours naturels (NC) à l'intérieur de l'image.

**6.** Procédé de traitement de données selon la revendication 5, **caractérisé en ce** le procédé de traitement des artefacts de blocs comprend en outre les étapes de :

- détection (BAD) d'artefacts de blocs comprenant les sous-étapes de :

• calcul (CT) d'un paramètre de discontinuité à partir des valeurs d'un pixel courant et de pixels adjacents audit pixel courant,
• détermination (AC) d'une valeur artefact du pixel courant à partir de paramètres de discontinuité du pixel courant et de pixels voisins du pixel courant,
• d'identification (ID) des artefacts de blocs dus à une technique de codage par blocs à partir des valeurs d'artefact,

- filtrage passe bas (LPF) des valeurs (Y) des pixels correspondant à des artefacts de blocs déterminés par l'étape de détection (BAD) à l'exclusion des zones de contours naturels (NC) déterminées par l'étape de filtrage gradient (GF).

**7.** Produit "programme d'ordinateur" pour récepteur de télévision comprenant un jeu d'instructions adaptées pour réaliser toutes les étapes du procédé de traitement de données selon l'une des revendications 1 à 6 quand ce programme est exécuté par ledit récepteur de télévision.

**8.** Produit "programme d'ordinateur" pour récepteur-décodeur numérique de télévision comprenant un jeu d'instructions adaptées pour réaliser toutes les étapes du procédé de traitement de données selon l'une des revendications 1 à 6 quand ce programme est exécuté par ledit récepteur-décodeur numérique de télévision.

**Patentansprüche**

**1.** Datenverarbeitungsverfahren eines digitalen Eingangsbilds, gebildet aus Pixeln für die Detektion eines Artefakts aufgrund von Umgebungsrauschen, wobei das besagte Verfahren Schritte enthält zur:

- Berechnung (ACT) eines spatialen Tätigkeitswerts eines laufenden Pixels anhand von Werten (Y) des besagten laufenden Pixels und von an dieses angrenzenden Pixeln,
- Bestimmung (NND) eines nicht natürlichen einheitlichen Bereichs (NN), wenn der spatiale Tätigkeitswert von mehreren aufeinanderfolgenden Pixeln kleiner als ein erster vorbestimmter Grenzwert ist,
- graduellen Filterung (GF) der dafür bestimmten Pixelwerte (Y), Konturen mit starker Lichtintensität (SE) im Innern des Bildes zu erkennen (THR1),
- Bestimmung (RD) eines Artefakts, wenn der spatiale Tätigkeitswert eines laufenden Pixels über einem zweiten vorbestimmten Grenzwert liegt und auf das besagte Pixel konzentriert ist, und
- Detektion (RD) eines durch Umgebungsrauschen bedingten Artefakts, wenn sich das aus dem Schritt zur Bestimmung des Artefakts kommende Artefakt zwischen einem nicht natürlichen einheitlichen Bereich (NN) und einer Kontur mit starker Lichtintensität (SE), die nahe zueinander liegen, befindet.

**2.** Datenverarbeitungsverfahren nach Anspruch 1, **dadurch gekennzeichnet, dass** der Schritt zur graduellen Filterung (GF) einen Sobel-Filter verwendet.

**3.** Datenverarbeitungsverfahren nach Anspruch 1, **dadurch gekennzeichnet, dass** es außerdem einen Filterschritt (FIL) der Werte (Y) der Pixel, die in einem Filterbereich zwischen einem nicht natürlichen einheitlichen Bereich (NN) und einer Kontur mit starker Lichtintensität (SE), die nahe zueinander liegen, enthalten sind, und wobei mindestens ein Artefakt aufgrund von Umgebungsrauschen erkannt wurde.

**4.** Datenverarbeitungsverfahren nach Anspruch 3, **dadurch gekennzeichnet, dass** der Filterschritt einen ersten Filter ($H_2$ bis $H_5$) für ein an eine Kontur mit starker Lichtintensität angrenzendes Pixel verwendet, wobei die Koeffizienten des besagten ersten Filters von der Position des angrenzenden Pixels in Bezug auf die Kontur starker Lichtintensität abhängen, und einen zweiten Filter ($H_1$) für die anderen Pixel des Filterbereichs verwendet.

**5.** Datenverarbeitungsverfahren nach Anspruch 1, **dadurch gekennzeichnet, dass** es mit einem Verarbeitungsverfahren der Blockartefakte verbunden ist, wobei das letztere Verfahren den Schritt zur graduellen Filterung (GF) von Werten (Y) der Pixel verwendet, um einen natürlichen Konturenbereich (NC) im Innern des Bildes zu erkennen.

**6.** Datenverarbeitungsverfahren nach Anspruch 3, **dadurch gekennzeichnet, dass** das Verarbeitungsverfahren der Blockartefakte außerdem die Schritte umfasst zur:

- Detektion (BAD) von Blockartefakten, welche die Unterschritte enthalten zur:

• Berechnung (CT) eines Diskontinuitätsparameters anhand der Werte eines laufenden Pixels und von an das besagte laufende Pixel angrenzenden Pixeln,
• Bestimmung (AC) eines Artefaktwerts des laufenden Pixels anhand von Diskontinuitätsparametern des laufenden Pixels und von zum laufenden Pixel benachbarten Pixeln,
• Identifizierung (ID) der Blockartefakte aufgrund einer Technik zur Codierung in Blöcken anhand der Artefaktwerte,

- Tiefpassfilterung (LPF) der Werte (Y) der Blockartefakte entsprechenden Pixel, bestimmt in dem Detektionsschritt (BAD), unter Ausnahme der natürlichen Konturbereiche (NC), in dem Schritt zur graduellen Filterung (GF) bestimmt.

**7.** "Computerprogramm"-Produkt für Fernsehempfänger mit einem angepassten Anweisungssatz zur Ausführung aller Schritte des Datenverarbeitungsverfahrens nach einem der Ansprüche 1 bis 6, wenn dieses Programm von dem besagten Fernsehempfänger ausgeführt wird.

**8.** Computerprogramm"-Produkt für eine digitale Fernsehe- und Decoderempfangsschaltung mit einem angepassten Anweisungssatz zur Ausführung aller Schritte des Datenverarbeitungsverfahrens nach einem der Ansprüche 1 bis 6, wenn dieses Programm von der besagten digitalen Fernsehe- und Decoderempfangsschaltung ausgeführt wird.

**Claims**

**1.** A method of processing data of a digital input image formed by pixels for detection of an artefact due to ringing noise, said method comprising the steps of:

- calculating (ACT) a spatial activity value of a current pixel based on values (Y) of said current pixel and of pixels adjacent thereto,
- determining (NND) a non-natural uniform area (NN) if the spatial activity value of various consecutive pixels is lower than a first predetermined threshold value,
- gradient filtering (GF) values (Y) of the pixels adapted to detect (THR1) strong edges (SE) inside the image,
- determining (RC) an artifact if the spatial activity value of a current pixel is higher than a second predetermined threshold value and is concentrated on said pixel, and
- detecting (RD) a ringing artifact if the artifact coming from the artifact determination step (RC) lies between a non-natural uniform area (NN) and a strong edge which are close together.

**2.** A data processing method as claimed in claim 1, **characterized in that** the gradient filter step (GF) utilizes a Sobel filter.

**3.** A data processing method as claimed in claim 1, **characterized in that** it further includes a step (FIL) of filtering values (Y) of the pixels comprised in a filtering area which is situated between a non-natural uniform area (NN) and a strong edge (SE) which are close together and where at least one ringing artifact has been detected.

**4.** A data processing method as claimed in claim 3, **characterized in that** the filter step (FIL) utilizes a first filter ($H_2$ to $H_5$) for an a pixel adjacent to a strong edge (SE), the coefficients of said first filter depending on the position of the adjacent pixel relative to the strong edge, and a second filter ($H_1$) for the other pixels of the filtering area.

**5.** A data processing method as claimed in claim 1, **characterized in that** it is associated with a method of processing blocking artifacts, the latter method utilizing the gradient filter step (GF) of values (Y) of the pixels for detecting an area of natural contours (NC) inside the image.

**6.** A data processing method as claimed in claim 5, **characterized in that** the blocking artifact processing method furthermore comprises the steps of:

- detecting blocking artifacts (BAD) comprising the sub-steps of:

• calculating (CT) a discontinuity parameter based on the values of a current pixel and adjacent pixels to said current pixel,
• determining (AC) an artifact value of the current pixel based on discontinuity parameters of the current pixel and of neighboring pixels of the current pixel,
• identifying (ID) blocking artifacts based on the artifact values,

- low-pass filtering (LPF) of the values (Y) of the pixels corresponding to block artifacts determined by the detection step (BAD) with the exception of natural contour areas (NC) determined by the gradient filter step (GF).

7. A "computer program" product for a television receiver comprising a set of instructions which are adapted for carrying out all the steps of the data processing method as claimed in any one of the claims 1 to 6 when this program is executed by said television receiver.

8. A "computer program" product for a set top box comprising a set of instructions which are adapted for carrying out all the steps of the data processing method as claimed in any one of the claims 1 to 6 when this program is executed by said set top box.

FIG. 1

FIG. 2

FIG. 3

FIG. 4

FIG. 5a    FIG. 5b    FIG. 5c    FIG. 5d

FIG. 6